# FASCICULE DE BREVET EUROPEEN

(11) **EP 0 996 838 B1**
(45) Date de publication et mention de la délivrance du brevet: **19.09.2001**
(21) Numéro de dépôt: 98940314.2
(22) Date de dépôt: 22.07.1998
(51) Int. Cl.: F16L 11/24

(54) **CONDUIT FLEXIBLE, PAR EXEMPLE TUYAU A USAGE MEDICAL OU CHIRURGICAL**
SCHLAUCH, ZUM BEISPIEL FÜR CHIRURGISCHE UND MEDIZINISCHE ZWECKE
FLEXIBLE CONDUIT, SUCH AS PIPE FOR MEDICAL OR SURGICAL USE

(30) Priorité: 24.07.1997 FR 9709668
(43) Date de publication de la demande: 03.05.2000
(73) Titulaire: Saint-Gobain Performance Plastics Gessil, 38290 La Verpillère (FR)
(72) Inventeur: BAILLY, Pierre, F-69002 Lyon (FR)
(74) Mandataire: Guerre, Dominique
(86) Numéro de dépôt international: FR9801623
(87) Numéro de publication internationale: WO9905441

(56) Documents cités:
- CH-A- 677 751
- US-A- 3 252 483
- US-A- 3 442 297
- US-A- 4 119 123
- US-A- 4 203 476
- US-A- 4 343 672
- US-A- 4 350 547
- US-A- 4 613 389

## Description

La présente invention concerne un conduit flexible, tel qu'utilisé ou façonné pour obtenir un tuyau à usage médical ou chirurgical, stérilisable, par exemple pour acheminer un gaz vers un patient ; étant entendu qu'un tel conduit peut recevoir beaucoup d'autres applications.

Conformément au document US-A-4 343 672, on décrit un procédé d'obtention d'un conduit flexible, ledit conduit comprenant une bande profilée comportant de manière monobloc une âme avec deux bordures complémentaires l'une de l'autre, et au moins une nervure saillant d'un côté à partir de l'âme, procédé selon lequel on obtient la bande profilée par extrusion d'une matière plastique réticulable, on enroule la bande profilée, après son obtention par extrusion, autour d'un axe selon une hélice à spires jointives, en sorte que les bordures complémentaires de la bande profilée, appartenant à deux spires respectivement différentes, forment entre elles directement un joint étanche, puis on réticule la bande profilée enroulée, à spires directement jointives, pour obtenir un conduit flexible monobloc.

En pratique, et en particulier s'agissant d'un tuyau à usage médical et chirurgical, un conduit flexible de type précédemment défini doit être assemblé au moins à une extrémité à un embout, lequel est en général manipulé, en particulier démonté et monté sur une partie fixe complémentaire, de manière répétée. Cet embout est généralement une pièce rapportée et montée de manière étanche à ladite extrémité du conduit.

Un tel embout est la source de multiples inconvénients.

La zone du conduit flexible, adjacente à l'embout, est soumise à des pliures répétées du fait de la manipulation du tuyau ou de l'embout, et constitue nécessairement une zone de fragilité. Ceci est particulièrement vrai pour un tuyau à usage médical ou chirurgical, qui est sans arrêt branché et débranché par rapport à une partie fixe, ou raccord, d'un autre tuyau ou d'un appareil, par exemple d'un respirateur. Et dans cette application, la stérilisation répétée du tuyau contribue encore à la fragilité de la zone adjacente à l'embout. Dans cet usage médical et chirurgical, une telle zone de fragilité n'est pas admissible, car elle contrevient à la sécurité du tuyau médical, en termes d'étanchéité vers l'intérieur ou l'extérieur du conduit.

Cet embout complique par ailleurs la fabrication du tuyau final, en requérant la fabrication d'une pièce indépendante, puis le montage étanche de cette dernière sur le conduit flexible. Dans certains cas, la différence de diamètre intérieur entre le conduit flexible proprement dit et l'embout, requiert en plus, soit d'adapter l'embout à cette variation du diamètre intérieur, soit de prévoir et monter sur le conduit flexible une pièce adaptatrice supplémentaire.

La présente invention a pour objet de remédier à ces inconvénients.

Plus particulièrement, l'invention a pour objet un procédé d'obtention d'un conduit flexible du type précédemment défini, permettant d'obtenir de manière monolithe une seule pièce intégrant non seulement un tube interne étanche, et une structure externe en hélice soutenant le tube interne, mais aussi le ou les embouts requis pour l'utilisation du conduit flexible.

A cette fin, selon l'invention, pendant l'étape d'enroulement de la bande profilée, on fait varier le pas d'enroulement de cette dernière, pour contrôler ou moduler selon la longueur du conduit l'apport de manière plastique déformable.

Par "spires directement jointives", on entend la formation d'un joint étanche au niveau de chaque bordure de la bande profilée, ce joint reliant de manière étanche, sans interposition d'un adhésif, chaque dite bordure à la bordure adjacente d'une spire adjacente. Ce joint est obtenu directement par liaison entre les deux bordures adjacentes, selon tout profil de jointoiement approprié, par exemple à bords droits, chanfreinés de manière oblique, ou encore en "marche d'escalier".

Ensuite, grâce au procédé précédemment défini, pendant l'étape (a), on peut faire varier le pas d'enroulement de la bande profilée, selon la longueur du conduit, ce qui permet de contrôler ou moduler selon la longueur du conduit l'apport de matière plastique malléable ou déformable, et la quantité de matière disponible par unité de longueur.

Préférentiellement, on diminue le pas d'enroulement pendant l'étape (a), par exemple à une extrémité du conduit, pour augmenter localement l'épaisseur de matière plastique disponible à l'état malléable ou formable, avant la réticulation.

Et si l'épaisseur de matière plastique déformable est ainsi augmentée pendant l'étape (a) à une et/ou l'autre extrémité du conduit, on peut ainsi former dans cette épaisseur un embout, alors que ladite matière plastique est encore malléable. Puis on réticule cette matière plastique pour obtenir un conduit flexible dont le ou les deux embouts sont monobloc avec le tube interne étanche, et dont la surface externe interrompt ou prolonge la structure externe en hélice.

Préférentiellement, selon l'étape (a), on enroule la bande profilée, à sa sortie de la filière d'extrusion, autour d'une barre mue en translation et en rotation, dont la section externe fixe ou prédétermine, en négatif, la section interne du conduit flexible, alors que la matière plastique est encore déformable ou malléable.

Ce choix opératoire est particulièrement intéressant, en ce qu'il permet de faire varier ou modifier la section interne, et selon la longueur de ce dernier, par exemple pour faire passer le diamètre interne du conduit, d'une valeur nominale, à une autre valeur, plus faible ou plus importante, fixée par un embout ou raccord, et ce sans autre pièce ou composant complémentaire, tel qu'adaptateur.

La présente invention est maintenant décrite par référence au dessin annexé, dans lequel :
- la figure 1 représente une vue en perspective d'une bande profilée, telle que mise en oeuvre selon l'invention,
- la figure 2 représente une variante d'exécution d'une bande profilée, telle que mise en oeuvre selon l'invention, toujours en perspective,
- les figures 3 à 6 représentent, en section, quatre modes d'exécution respectivement différents, d'une bande profilée telle que mise en oeuvre selon l'invention,
- la figure 7 représente, du côté gauche une vue en coupe, et du côté droit une vue de face d'un conduit flexible complet susceptible d'être obtenu selon l'invention.
- la figure 8 représente de manière schématique un équipement ou banc, permettant d'obtenir un conduit flexible, conformément à la présente invention.

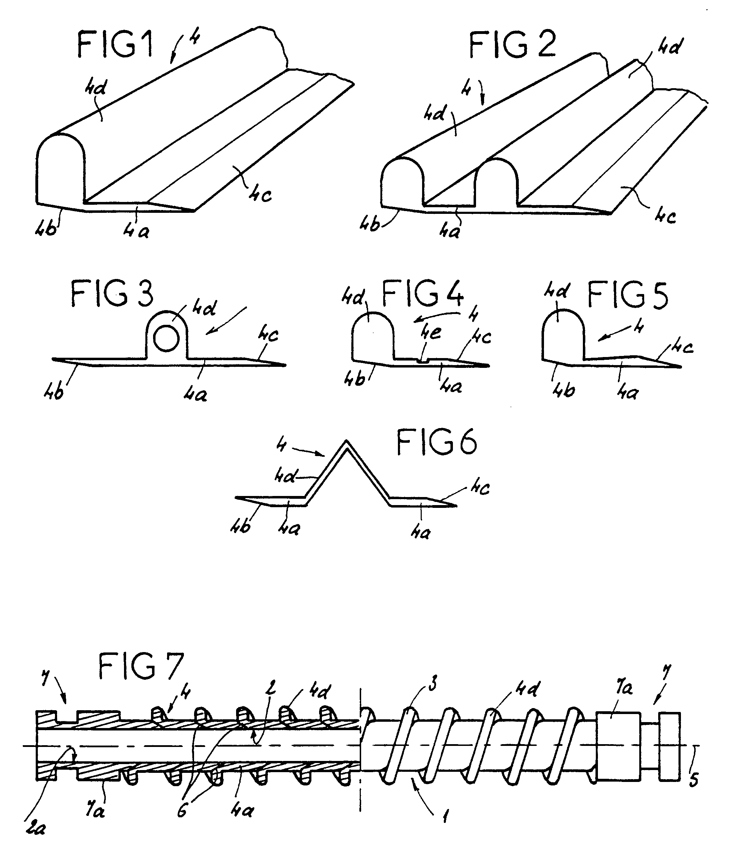

Un conduit flexible 1 (Cf. figure 7) est obtenu selon l'invention à partir d'une bande profilée 4, elle-même obtenue par extrusion, notamment d'un matériau plastique, par exemple d'un silicone à l'état non réticulé.

De manière générale, cette bande profilée 4 comprend, selon une construction ou structure monobloc, une âme 4a, comportant deux bordures 4b et 4c complémentaires l'une de l'autre, et au moins une nervure 4d saillant d'un côté à partir de l'âme 4a.

Cette bande profilée 4 comporte par ailleurs les caractéristiques suivantes :
- les deux bordures 4b et 4c de l'âme 4a de la bande profilée 4 sont formées selon respectivement deux chanfreins complémentaires l'un de l'autre,
- la nervure 4d a une section transversale arrondie à son sommet ; cette section transversale peut être rectangulaire ou triangulaire par exemple,
- la nervure 4d a une section pleine ; cette section peut être creuse comme représenté par exemple à la figure 3 ; cette section peut être en particulier en soufflet, comme représenté à la figure 6,
- la nervure 4d est disposée du côté d'une bordure de la bande profilée 4, par exemple du côté de la bordure 4b.

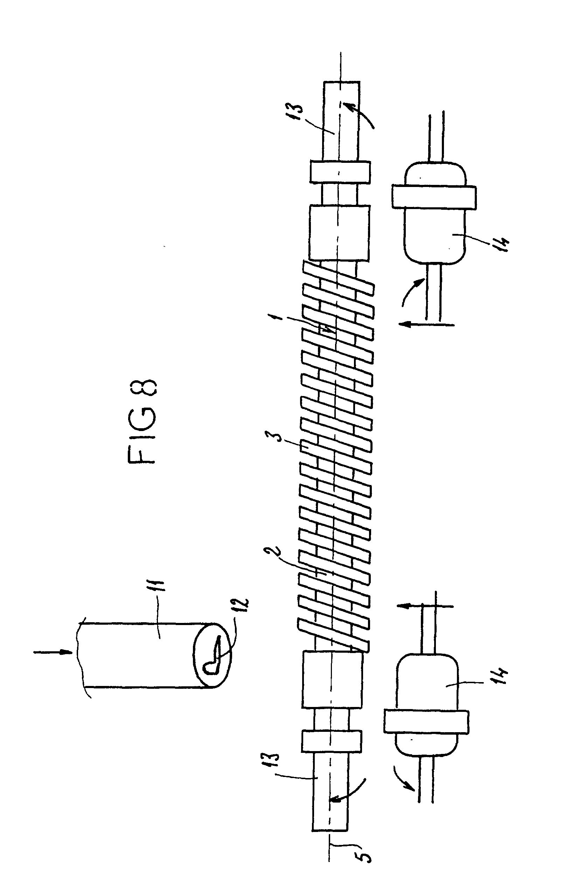

Pour obtenir et mettre en oeuvre cette bande profilée 4, on utilise un banc de fabrication représenté de manière schématique à la Figure 8, et comprenant :
- une tête d'extrusion 11 de la matière plastique (silicone non réticulé), dont la filière 12 détermine le profil de la bande 4 précédemment définie,
- une barre 13 pouvant être mue en translation et rotation par rapport à la tête d'extrusion 11,
- deux outils 14 avec galets, pouvant être rapprochés de la barre 13, parallèlement à cette dernière, et mus en rotation, pour former dans la matière plastique malléable du conduit, des embouts ayant une forme de révolution.

Immédiatement à la sortie de la tête d'extrusion 11, la bande profilée, ayant les caractéristiques décrites précédemment, est enroulée autour d'un axe 5, correspondant à la barre 13 mue en translation et en rotation, selon une hélice à spires directement jointives, en sorte que les bordures complémentaires 4b et 4c de la bande profilée, appartenant à deux spires respectivement différentes, forment entre elles, et directement, un joint étanche 6. De cette manière, l'enroulement à spires directement jointives de manière étanche, de l'âme 4a de la bande profilée 4, génère un tube interne 2. En correspondance, l'enroulement en hélice de la nervure 4d de la bande profilée 4 génère une structure externe 3 en hélice, soutenant le tube interne 2, étanche.

De manière non représentée à la figure 8, aux deux extrémités de la barre 13, on diminue le pas d'enroulement de la bande profilée, par rapport au pas dans la partie restante du conduit en cours d'obtention. Ceci permet de disposer aux deux extrémités d'un supplément ou surépaisseur de matière plastique, à l'état malléable ou formable.

Lorsque le matériau plastique du profilé est encore formable ou malléable, c'est-à-dire avant réticulation du matériau élastomère, aux deux extrémités du conduit 1, la matière de la bande profilée 4, enroulée en hélice, est formée, par l'action en rotation des deux outils 14 avec galet, selon respectivement deux embouts 7, ayant une symétrie de révolution, monoblocs avec le tube interne 2, dont la surface externe 7a interrompt ou prolonge la structure externe 3 en hélice (Cf. figure 7), et dont la surface interne est en continuité avec celle du tube 2.

On obtient donc un conduit flexible, ayant généralement la structure représentée à la figure 7, à partir uniquement de la bande profilée extrudée 4, qui en particulier apporte la matière nécessaire au formage du tube interne 2, de la structure externe 3 en hélice, mais également des embouts 7, en ayant diminué le pas d'enroulement à leur endroit.

Ce conduit 1 est ensuite fixé dans sa forme définitive représentée à la figure 7, par réticulation de l'élastomère.

La présente invention comporte encore les variantes suivantes, pouvant être considérées seules ou en combinaison :
- conformément à la figure 2, la bande profilée 4 comporte au moins deux nervures 4d parallèles, ce qui permet en particulier de diminuer le temps de l'opération d'enroulement en hélice, selon l'étape (a) précédemment décrite.
- conformément à la figure 5, la partie 4a de la bande profilée 4 comporte une épaisseur variable selon la largeur de la bande profilée, en dehors de la nervure, de manière en particulier à définir une zone relativement peu épaisse, en hélice, favorisant et prédéterminant la courbure du produit flexible 1,
- l'âme 4a de la bande profilée 4 comporte une encoche 4e parallèle à la nervure 4d, comme représenté à la figure 4; cette encoche en hélice dans le conduit terminé favorise et prédétermine la courbure du conduit flexible 1, lui donne de la souplesse, et permet une conformation en accordéon, en particulier pour le stockage,
- la nervure 4d peut être disposée au milieu ou au centre de l'âme 4a, comme représenté à la figure 3.
- la section de la nervure 4d peut être creuse comme représenté à la figure 3, et triangulaire ou à angles vifs, au lieu d'être arrondie; cette section peut en particulier avoir la forme d'un soufflet, ou d'un élément de soufflet, comme représenté à la figure 6.

Il résulte du procédé décrit précédemment que l'épaisseur est différente, à savoir plus importante que celle du tube interne 2, au niveau des embouts 7, ce qui renforce le conduit 2 à son extrémité. Cette résistance améliorée permet de connecter et déconnecter le conduit par rapport à tout autre pièce ou raccord, par exemple sur le connecteur d'une machine de respiration assistée, sans affaiblir ou fragiliser pour autant le conduit flexible.

La section intérieure de chaque embout 7 n'a pas nécessairement une forme de révolution ; cette section intérieure peut avoir en particulier une forme polygonale.

La section interne du tube interne 2 et des embouts 7 peut être variable selon la longueur du conduit ; elle peut être en particulier légèrement tronconique. Et surtout, au niveau des embouts 7, elle peut être plus faible ou plus importante que la section interne nominale du tube, pour pourvoir raccorder lesdits embouts à tout raccord ou pièce de section différente de la section interne nominale, et ce sans autre disposition complémentaire ou rapportée.

La surface intérieure 2a du tube interne 2 peut être ondulée ou striée, ou complètement lisse, d'une extrémité à une autre, y compris en continuité avec la surface interne des embouts.

La surface interne du conduit 1 peut être continue selon toute sa longueur, embouts 7 compris, en particulier sans discontinuité, par exemple en "marche d'escalier", entre le conduit proprement dit et le ou les embouts.

L'âme 4a et/ou la nervure 4d peuvent comporter une armature, par exemple une structure tissée ou non, ou un insert, renforçant ou conférant d'autres propriétés ou caractéristiques au conduit flexible terminé.

## Revendications

1. Procédé d'obtention d'un conduit flexible (1), ledit conduit comprenant une bande (4) profilée comportant de manière monobloc une âme (4a) avec deux bordures (4b, 4c) complémentaires l'une de l'autre, et au moins une nervure (4d) saillant d'un côté à partir de l'âme, procédé selon lequel on obtient la bande (4) profilée par extrusion d'une matière plastique réticulable, on enroule la bande profilée, après son obtention par extrusion, autour d'un axe (5) selon une hélice à spires jointives, en sorte que les bordures complémentaires (4b, 4c) de la bande profilée, appartenant à deux spires respectivement différentes, forment entre elles directement un joint (6) étanche, puis on réticule la bande profilée enroulée, à spires directement jointives, pour obtenir un conduit flexible monobloc **caractérisé en ce que**, pendant l'étape d'enroulement de la bande profilée, on fait varier le pas d'enroulement de cette dernière, pour contrôler ou moduler selon la longueur du conduit (1) l'apport de matière plastique déformable.

2. Procédé selon la revendication 1, **caractérisé en ce que**, en diminuant le pas d'enroulement, on augmente l'épaisseur de matière plastique disponible à l'état malléable ou formable, avant la réticulation.

3. Procédé selon la revendication 2, **caractérisé en ce que** on augmente l'épaisseur de matière plastique formable, au moins à une extrémité du conduit, on forme dans cette épaisseur un embout, et on réticule la matière plastique pour obtenir un conduit flexible dont l'embout (7) est monobloc avec le tube (2), et dont la surface externe (7a) interrompt ou prolonge la structure externe (3) en hélice.

4. Procédé selon la revendication 1, **caractérisé en ce que**, selon l'étape (a), on enroule la bande profilée, à sa sortie de la filière d'extrusion, autour d'une barre mue en translation et en rotation, et la section externe de ladite barre fixe la section interne du conduit flexible.

5. Procédé selon les revendications 3 et 4, **caractérisé en ce que** on forme l'embout dans l'épaisseur de matière plastique formable, avec un galet fixant la forme externe de révolution de l'embout.

6. Procédé selon les revendications 3 et 4, **caractérisé en ce que** on forme l'embout par estampage ou matriçage.

7. Procédé selon la revendication 4, **caractérisé en ce que** on rapporte à au moins une extrémité de la barre un embout, fixant à l'extrémité correspondante du conduit flexible une forme intérieure différente de celle du reste dudit conduit.

8. Conduit susceptible d'être obtenu par un procédé selon l'une quelconque des revendications 1 à 7.

9. Conduit selon la revendication 8, **caractérisé en ce que**, la bande profilée (4) comporte au moins deux nervures (4d) parallèles.

10. Conduit selon la revendication 8, **caractérisé en ce que** l'âme (4a) de la bande profilée (4) comporte une épaisseur variable selon la largeur de la bande profilée, en dehors de la nervure (4d).

11. Conduit selon la revendication 8, **caractérisé en ce que** l'âme (4a) de la bande profilée (4) comporte une encoche (4e) parallèle à la nervure (4d).

12. Conduit susceptible d'être obtenu par le procédé selon les revendications 1, 4 et 7, **caractérisé en ce que** la section intérieure de l'embout (7) n'a pas une forme de révolution.

13. Conduit selon la revendication 8, **caractérisé en ce que** la section interne (2), notamment diamètre interne, est variable selon la longueur dudit conduit.

14. Tuyau à usage chirurgical ou médical, stérilisable, par exemple pour acheminer un gaz vers un patient, **caractérisé en ce qu'**il comprend un conduit (1) selon l'une quelconque des revendications 8 à 13.

## Claims

1. Process for obtaining a flexible conduit (1), said conduit comprising a profiled strip (4) having, as one piece, a web (4a) with two mutually complementary marginal edges (4b, 4c), and at least one rib (4d) projecting on one side from the web, according to which process the profiled strip (4) is obtained by extruding a crosslinkable plastic, the profiled strip, after it has been obtained by extrusion, is wound about an axis (5) in a helix with touching turns, so that the complementary marginal edges (4b, 4c) of the profiled strip, belonging respectively to two different turns, form between them, directly, a sealed joint (6), the wound profiled strip, with directly touching turns, is then crosslinked in order to obtain a one-piece flexible conduit, **characterized in that**, during the step of winding the profiled strip, the winding pitch of the latter is varied in order to control or modulate the supply of deformable plastic along the length of the conduit (1).

2. Process according to Claim 1, **characterized in that**, by decreasing the winding pitch, the thickness of plastic available in the malleable or formable state, before crosslinking, is increased.

3. Process according to Claim 2, **characterized in that** the thickness of formable plastic is increased, at least at one end of the conduit, an end-piece is formed in this thickness and the plastic is crosslinked in order to obtain a flexible conduit whose end-piece (7) is integral with the tube (2) and whose external surface (7a) interrupts or extends the helical external structure (3).

4. Process according to Claim 1, **characterized in that**, in step (a), the profiled strip, on leaving the extrusion die, is wound around a bar which is moved in translation and in rotation, and the external cross section of said bar sets the internal cross section of the flexible conduit.

5. Process according to Claims 3 and 4, **characterized in that** the end-piece is formed in the thickness of formable plastic with a roller, which determines the external axisymmetric shape of the end-piece.

6. Process according to Claims 3 and 4, **characterized in that** the end-piece is formed by stamping or die forming.

7. Process according to Claim 4, **characterized in that**, at least at one end of the bar, an end-piece is added, which sets, at the corresponding end of the flexible conduit, an internal shape different from that of the rest of said conduit.

8. Conduit capable of being obtained by a process according to any one of Claims 1 to 7.

9. Conduit according to Claim 8, **characterized in that** the profiled strip (4) has at least two parallel ribs (4d).

10. Conduit according to Claim 8, **characterized in that** the web (4a) of the profiled strip (4) has a thickness which can vary over the width of the profiled strip, away from the rib (4d).

11. Conduit according to Claim 8, **characterized in that** the web (4a) of the profiled strip (4) has a notch (4e) parallel to the rib (4d).

12. Conduit capable of being obtained by the process according to Claims 1, 4 and 7, **characterized in that** the internal cross section of the end-piece (7) is not axisymmetric.

13. Conduit according to Claim 8, **characterized in that** the internal cross section (2), especially the internal diameter, can vary along the length of said conduit.

14. Sterilizable hose for surgical or medical use, for example in order to convey a gas to a patent, **characterized in that** it comprises a conduit (1) according to any one of Claims 8 to 13.

## Patentansprüche

1. Verfahren zur Herstellung einer biegsamen Rohrleitung (1), die ein profiliertes Band (4) aufweist, das in einstückiger Ausbildung einen Kern (4a) mit zwei zueinander komplementären Rändern (4b, 4c) sowie wenigstens eine Rippe (4d) umfaßt, die auf einer Seite von dem Kern absteht, wobei das profilierte Band (4) durch Extrusion eines vernetzbaren Kunststoffs hergestellt wird, das profilierte Band nach seiner Herstellung durch Extrusion entlang einer Schraubenlinie mit aneinander anliegenden Windungen um eine Achse (5) gerollt wird, so daß die komplementären Ränder (4b, 4c) des profilierten Bandes, die zu jeweils unterschiedlichen Windungen gehören, zwischen sich unmittelbar eine dichte Verbindung (6) bilden, und dann das aufgerollte profilierte Band mit unmittelbar aneinander angrenzenden Windungen vernetzt wird, um eine einstückige biegsame Rohrleitung zu erhalten, **dadurch gekennzeichnet, daß** während des Schritts des Aufrollens des profilierten Bandes die Geschwindigkeit des Aufrollens variiert wird, um der Länge der Rohrleitung (1) nach die Zufuhr von deformierbaren Kunststoff zu steuern oder zu modulieren.

2. Verfahren nach Anspruch 1, **dadurch gekennzeichnet, daß** vor der Vernetzung die Dicke des in modellier- oder formbaren Zustand verfügbaren Kunststoffs vergrößert wird, indem die Geschwindigkeit des Aufrollens verringert wird.

3. Verfahren nach Anspruch 2, **dadurch gekennzeichnet, daß** wenigstens an einem Ende der Rohrleitung die Dicke des formbaren Kunststoffs vergrößert, in diese Dicke ein Stutzen eingeformt und der Kunststoff vernetzt wird, um eine biegsame Rohrleitung zu erhalten, deren Stutzen (7) einstückig mit dem Kanal (2) ausgebildet ist, wobei dessen Außenfläche (7a) die schraubenförmige Außenstruktur (3) unterbricht oder fortsetzt.

4. Verfahren nach Anspruch 1, **dadurch gekennzeichnet, daß** gemäß Schritt (a) das profilierte Band bei seinem Verlassen der Spritzdüse um einen in Translation und Rotation versetzten Stab herum aufgerollt wird, und daß der Außenquerschnitt des Stabes den Innenquerschnitt der biegsamen Rohrleitung bestimmt.

5. Verfahren nach den Ansprüchen 3 und 4, **dadurch gekennzeichnet, daß** der Stutzen in die Dicke des formbaren Kunststoffs mit einer Rolle geformt wird, die die Rotations-Außenform des Stutzens festlegt.

6. Verfahren nach den Ansprüche 3 und 4, **dadurch gekennzeichnet, daß** der Stutzen durch Prägen oder Matrizieren geformt wird.

7. Verfahren nach Anspruch 4, **dadurch gekennzeichnet, daß** an wenigstens einem Ende des Stabes ein Stutzen angebracht wird, der an dem entsprechenden Ende der biegsamen Rohrleitung eine Innenform festlegt, die von derjenigen der übrigen Rohrleitung verschieden ist.

8. Rohrleitung, die durch ein Verfahren nach einem der Ansprüche 1 bis 7 herstellbar ist.

9. Rohrleitung nach Anspruch 8, **dadurch gekennzeichnet, daß** das profilierte Band (4) wenigstens zwei parallele Rippen (4d) aufweist.

10. Rohrleitung nach Anspruch 8, **dadurch gekennzeichnet, daß** der Kern (4a) des profilierten Bandes (4) außerhalb der Rippe (4d) eine Dicke aufweist, die sich entlang der Breite des profilierten Bandes verändert.

11. Rohrleitung nach Anspruch 8, **dadurch gekennzeichnet, daß** der Kern (4a) des profilierten Bandes (4) parallel zu der Rippe (4d) eine Einkerbung (4e) aufweist.

12. Rohrleitung, die geeignet ist, durch ein Verfahren nach einem der Ansprüche 1, 4 und 7 hergestellt zu werden, **dadurch gekennzeichnet, daß** der Innenquerschnitt des Stutzens (7) keine Rotationsform aufweist.

13. Rohrleitung nach Anspruch 8, **dadurch gekennzeichnet, daß** sich der Innenquerschnitt (2), insbesondere der Innendurchmesser, der Länge der Rohrleitung nach verändert.

14. Sterilisierbarer Schlauch für medizinische oder chirurgische Zwecke, z.B. um ein Gas zu einem Patienten zu leiten, **dadurch gekennzeichnet, daß** er eine Rohrleitung (1) nach einem der Ansprüche 8 bis 13 aufweist.
